**Europäisches Patentamt**

**European Patent Office**

**Office européen des brevets**

(11) Veröffentlichungsnummer: **0 464 253 A1**

## (12) EUROPÄISCHE PATENTANMELDUNG

(21) Anmeldenummer: **90114004.6**

(22) Anmeldetag: **21.07.90**

(51) Int. Cl.5: **B65F 1/12**, B65F 1/00, B65F 3/00, B65F 3/02

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich. (letzter Teil von Anspruch 3 fehlt).

(30) Priorität: **08.06.90 DE 4018424**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **MABEG GESELLSCHAFT FÜR ABFALLWIRTSCHAFT UND ENTSORGUNGSTECHNICK MBH & CO. OHG Am Stöckmannshof 2 W-4690 Herne 2(DE)**

(72) Erfinder: **Nolte, Hans, Bauingenieur Fahrendelle 19 W-5810 Witten-Heven(DE)**

(74) Vertreter: **Herrmann-Trentepohl, Werner, Dipl.-Ing. et al Patentanwälte Herrmann-Trentepohl, Kirschner, Grosse, Bockhorni & Partner Schäferstrasse 18 Postfach 1140 W-4690 Herne 1(DE)**

(54) **Anordnung zum Verladen von nach Farben sortierten Hohlgläsern.**

(57) Bei einer Anordnung zum Verladen von nach Farben sortierten Hohlgläsern, bestehend aus einem Depotbehälter (1), der durch vertikale Unterteilung Weißglas, Buntglas und gegebenenfalls Nichtglas in getrennten Kammern (18-22) mit jeweils einer zur Entleerung beweglichen Kammerwand (12, 13) enthält, sowie eine über den Kammern (18-22) angeordnete Sortiereinrichtung aufweist, einem vorzugsweise als Fahrzeug (26) mit Ladepritsche ausgebildeten Sammler (23), der in Abteile für die Glassorten und das Nichtglas unterteilt ist und aus einem Ladekran (28) mit schwenkbarem Ausleger (30), der mehrere mit Antrieben versehene Sektionen (31, 32) aufweist und mit einer Aufnahme (33) versehen ist, die durch einen beweglichen Riegel (36) mit einer auf dem Depotbehälter (1) festen Aufhängung (35) kuppelbar ist, ist erfindungsgemäß vorgesehen, daß die beweglichen Kammerwände (12, 13) einzeln zu öffnen und zu schließen und die Abteile (FGBW) des Sammlers (23) hintereinander angeordnet sind, deren Anordnungsrichtung mit einer der durch die Betätigung der Auslegersektionsantriebe möglichen Streichrichtung der Aufnahme (33) übereinstimmt, die für den fernbedienbaren Riegel (36) ein ebenfalls fernbedienbares Drehwerk (39) zum Schwenken des Behälters um die Hochachse und ein fernbedienbares, zum Öffnen und Schließen der beweglichen Kammerwände (12, 13) dienendes Hubwerk (41) aufweist, und daß für den Kran (28) die Auslegerantriebe, sowie die Fernbedienungen des Riegels (36) des Drehwerkes (39) und des Hubwerkes (41) eine Programmsteuerung vorgesehen ist, die das Aufnehmen des Depotbehälters (1), eine schrittweise Betätigung des Kranauslegers (30), die den Depotbehälter (1) nacheinander über die Abteile FGBW des Sammlers (23) verbringt und die Drehung des Depotbehälters (1), sowie das Öffnen und Schließen der beweglichen Kammerwände (12, 13) entsprechend der Stellung des Depotbehälters (1) über den Abteilen (FGBW), sowie das Entriegeln des Depotbehälters (1) automatisch ablaufen läßt.

## Fig. 5

Die Erfindung betrifft eine Anordnung zum Verladen von nach Farben sortierten Hohlgläsern gemäß dem Oberbegriff des Anspruches 1.

Die Erfindung bezieht sich dabei insbesondere auf den Vorgang, mit dem das in die zentral aufgestellten Depotbehältern gesammelte und in Weißglas, Buntglas und Grünglas sortierte Glas nach Sorten getrennt, vorzugsweise aus mehreren Depotbehältern derart in einen Sammler überführt wird, daß die Sorten voneinander getrennt gehalten werden. Das ist durch die Eigenart der Wiederverwendung von Altglas bedingt, die das wertvollste Weißglas frei von den Scherben des weniger wertvollen Buntglases und von Nichtglas, z.B. Verpakkungsbehältern und insbesondere Flaschen aus keramischem Material verlangt. Dieser Vorgang, auf den sich die Erfindung bezieht, kann darin bestehen, die Depotbehälter zu dem Sammler zu transportieren und dort zu entleeren, um sie anschließend wieder zurückzubringen. Gemäß der vorzugsweisen Ausführungsform der Erfindung wird jedoch der Sammler zu den Depotbehältern gebracht, um nur das Nettogewicht des sortierten Glases transportieren zu müssen, wobei dann allerdings meistens auch das Nichtglas abtransportiert wird. In diesem Falle wird ein Lkw mit einer entsprechend den Sorten unterteilten Ladepritsche bzw. einen aufgeladenen Container als Sammler verwendet. Der beschriebene Vorgang setzt in jedem Fall voraus, daß die Depotbehälter einzeln angehoben werden, um sie über die Abteile des Sammlers zu verbringen, und daß sie nach ihrer Entleerung wieder auf ihren Aufstellungsort abgesetzt werden. Dazu dient in der erfindungsgemäßen Anordnung ein Ladekran, welcher in der vorstehend beschriebenen Ausführungsform der Erfindung, die sich eines Lkw's mit Ladepritsche oder Containers bedient, vorzugsweise als Aufbaukran des Lkw ausgebildet ist. In der Regel weist ein derartiger Kran eine drehbare Kransäule auf, mit der der Ausleger geschwenkt werden kann, und der Ausleger ist unterteilt. Die Unterteilung des Auslegers in einzelne, jeweils mit einem Antrieb versehene Sektionen ermöglicht es, die an der Spitze des Ladekrans vorgesehene Aufnahme für den jeweils zu entleerenden Depotbehälter über unterschiedliche Entfernungen zu bewegen, so daß einerseits der Hohlpunkt des Depotbehälters und andererseits der Sammler für die Entleerung des sortierten Glases erreicht werden können.

Im allgemeinen vewendet die Erfindung Depotbehälter, welche das der Sortierung aufgegebene Hohlglas - dabei handelt es sich hauptsächlich um Flaschen, Einmachgläser und andere Glasgefäße, die von den im Bereich des Depotbehälters gelegenen Haushalten angeliefert werden -in den Kammern zertrümmern, so daß diese Scherben enthalten. Das ist zweckmäßig, weil dadurch das Schüttgewicht des sortierten Glases vergrößert und der Rauminhalt der Kammern besser ausgenutzt wird. Die Sortierung arbeitet automatisch und insbesonere mit einer optoelektronischen Farberkennung des Glases, sowie mit einer Abwurfeinrichtung, die das Glas je nach erkannter Farbe in die dieser Farbe zugeordnete Kammer gelangen läßt. Solche Sortiereinrichtungen sind vergleichsweise einfach und sicher, weil die Farberkennung und Sortierung von Glasscherben wesentlich schwieriger und aufwendiger ist. Im übrigen werden die Kammern durch die mit der beweglichen Kammerwand verschließbare Öffnung in den Sammler entleert, indem die sortierten Gläser in Form von Scherben durch die Schwerkraft aus der Kammer herausgleiten.

Um den Strom der Scherben in das für das betreffende Glas vorgesehene Abteil zu lenken, ist die erfindungsgemäße Aufnahme mit einer Riegelvorrichtung mit der auf der behälterfesten Aufhängung kuppelbar. Dadurch wird erreicht, daß der aufgenommene Depotbehälter gegen Drehungen um seine Hochachse gesperrt ist, um die Öffnungen der Kammern über den Abteilen des Sammlers auszurichten, bevor die Entleerung ausgelöst wird. Dadurch ist es möglich ,die Scherben des sortierten Glases getrennt in die Abteile des Sammlers einzubringen.

Die Erfindung geht dabei von einer vorbekannten Anordnung aus (EP-A 0334987). Hierbei ist eine gleichzeitige Entleerung aller Kammern des Depotbheälters vorgesehen, um zu vermeiden, daß einzelne Kammern desselben Depotbehälters irrtümlich über den Inhalt bereits entleerter Kammern dieses Depotbehälters und damit über den falschen Abteilen des Sammlers entleert werden können. Das setzt eine Unterteilung des Sammlers entsprechend dem Grundriß des Depotbehälters voraus. Die dadurch erzwungene Anordnung der Sammlerabteile ist für deren ausreichende Bemessung und spätere Entleerung nicht optimal. U.a. ist es schwierig, auf einer gegebenen Grundfläche einer Fahrzeugpritsche bzw. eines Containers Abteile mit hinreichender Ladekapazität für das in verhältnismäßig großer Menge anfallende Weißglas und die demgegenüber geringeren Mengen von Braunund Grünglas sowie das Nichtglas so einzurichten, daß die Entleerung optimal, beispielsweise durch Abkippen der Ladepritsche erfolgen kann, ohne daß Scherben verschiedener Glassorten sich wieder miteinander mischen. Es ist ferner nicht zu erreichen, daß die Ausrichtung des Depotbehälters über den richtigen Abteilen des Sammlers irrtumsfrei erfolgt. Vielmehr kann nicht verhindert werden, daß einzelne Depotbehälter über den Abteilen falsch orientiert und entleert werden, wodurch die gesamte Charge unbrauchbar wird oder doch wesentlich an Wert verliert.

Der Erfindung liegt die Aufgabe zugrunde, eine Anordnung der eingangs beschriebenen Art zu schaffen, welche den Vorgang des Überführens der Sorten aus den Depotbehältern in den Sammler irrtumsfrei und damit so ermöglicht, daß eine nachträgliche Durchmischung der Sorten nicht auftreten kann.

Diese Aufgabe löst die Erfindung mit den Merkmalen des Anspruches 1. Weitere zweckmäßige Merkmale der Erfindung sind Gegenstand der Unteransprüche.

Gemäß der Erfindung wird erreicht, daß der Grundriß der Abteile des Sammlers unabhängig von dem Grundriß des Depotbehälters wird, weil die Kammern einzeln, d.h. in der Regel in einer bestimmten Reihenfolge entleert werden. Die Abteile sind dann in einer Richtung hintereinander angeordnet, welche mit dem Kran durch Betätigung seiner Antriebe, d.h. insbesondere der Auslegersektionsantriebe bestrichen werden kann. Dadurch ist es möglich, einen rechteckigen Grundriß des Sammlers durch Querwände zu unterteilen, wodurch optimal bemessene Abteile geschaffen werden und, falls erforderlich, die Entleerung des Sammlers durch einen seitlichen Kippvorgang erreicht werden kann. Die kammernweise Entleerung des Depotbehälters erfolgt dann durch Drehen um die Behälterhochachse, wodurch die jeweilige Kammeröffnung über das zugeordnete Abteil verbracht wird, bevor die betreffende Kammerwand aufgezogen und danach wieder geschlossen wird.

Die irrtumsfreie Betätigung dieser Vorgänge wird einerseits durch die Fernbedienbarkeit der für den betreffenden Vorgang entscheidenen Antriebe und durch deren automatische Betätigung im Rahmen einer Programmsteuerung erreicht. Hierbei kann es sich um eine einfache Folgesteuerung hydraulischer Ausführung handeln, welche über Endschalter die jeweiligen Bewegungsvorgänge begrenzt und nacheinander ablaufen läßt. In anderen Fällen wird man einen Rechner verwenden, der die entscheidenden Daten gespeichert hat und gemäß einem Programm die Vorgänge in der gewünschten Reihenfolge steuert.

Die Erfindung hat den Vorteil, daß unter normalen Umständen, d.h. außer in den Fällen, in denen durch irgend welche Störungen im Programmablauf eine Handbetätigung der entscheidenden Antriebe erforderlich wird, der gesamte Vorgang ohne Eingriff einer Bedienungsperson etwa des Fahrers eines den Sammler tragenden Lkw abläuft. Das vermeidet nicht nur die unerwünschte Durchmischung von Scherben verschiedener Sorten, sondern erleichtert auch den Vorgang des Verladens so weit, daß erhebliche Fahrleistungen mit dementsprechend optimaler Ausnutzung der eingesetzten Anlagenteile erreicht werden können.

Mit den Merkmalen des Anspruches 2 wird eine für die erfindungsgemäße Anordnung optimale Ausbildung des Depotbehälters vorgeschlagen, die deswegen auch außerhalb der erfindungsgemäßen Anordnung mit Vorteil verwendet werden kann. Während nämlich bislang Depotbehälter als Bodenentleerer ausgeführt sind, bei denen sich die Kammern nur gemeinsam entleeren lassen, ist der neue Behälter als Schrägbodenentleerer mit senkrecht verschieblicher Außenwand ausgeführt. Dadurch kann die Öffnung der Kammer wesentlich größer gestaltet werden, was einerseits die Entleerung des Behälters beschleunigt und andererseits dessen restlose Entleerung gewährleistet. Außerdem läßt sich der Strom der Scherben bei richtiger Orientierung des Depotbehälters über dem betreffenden Abteil besser lenken.

Um beim derartigen Behälter einen optimalen Kammerinhalt zu gewährleisten, können die Merkmale des Anspruches 3 verwirklicht werden. Der dort vorgeschlagene polygonale Grundriß kommt dem für die optimale Ausnutzung des Behältervolumens am besten geeigneten kreisförmigen Grundriß am nächsten. Dabei kann man die für die Führung der Außenwände erforderlichen Vorrichtungen günstig über den kurzen Polygonseiten anordnen und eine dieser Seiten dazu benutzen, das verhältnismäßig kleine Volumen der Kammer für Nichtglas über dieser Seite zu entleeren.

Mit den Merkmalen des Anspruches 4 wird eine Aufnahme am Ausleger des Krans geschaffen, welche sich in besonderer Weise für den automtischen Ablauf des beschriebenen Vorganges eignet. Hierbei sind nämlich die Baugruppen des Drehwerkes und des Hubwerkes derart gewichtsausgeglichen, daß bei hängendem Behälter keine oder nur unwesentliche Momente entstehen können, die den Behälter aus seiner senkrechten Stellung auslenken können. Auf diese Weise wird verhindert, daß der Entleerungsstrom aus den Kammern nicht oder nur unzureichend die Abteile des Sammlers erreichen kann.

Die Einzelheiten, weitere Merkmale und andere Vorteile der Erfindung ergeben sich aus der nachfolgenden Beschreibung einer Ausführungsform der Erfindung anhand der Figuren in der Zeichnung; es zeigen

Fig. 1     einen Depotbehälter gemäß der Erfindung in perspektivischer Ansicht mit geschlossenen Kammerwänden,

Fig. 2     den Gegenstand der Fig. 1 mit einer sich öffnenden Kammerwand,

Fig. 3     in abgebrochener Darstellung und in Seitenansicht einen Depotbehälter gemäß der Erfindung mit der darüber angeordneten Aufnahme an dem nur teilweise dargestellten Kranausleger,

Fig. 4     die in Fig. 3 mit IV bezeichnete Einzelheit,

Fig. 5     einen auf einem Lkw eingerichteten Sammler mit zugeordnetem Aufbaukran und

Fig. 6 unterschiedliche Größenverhältnisse
der Sammler in einer Vorrichtung gemäß Fig. 5 bei Verwendung eines
links in etwa maßstäblich gezeichneten Depotbehälters.

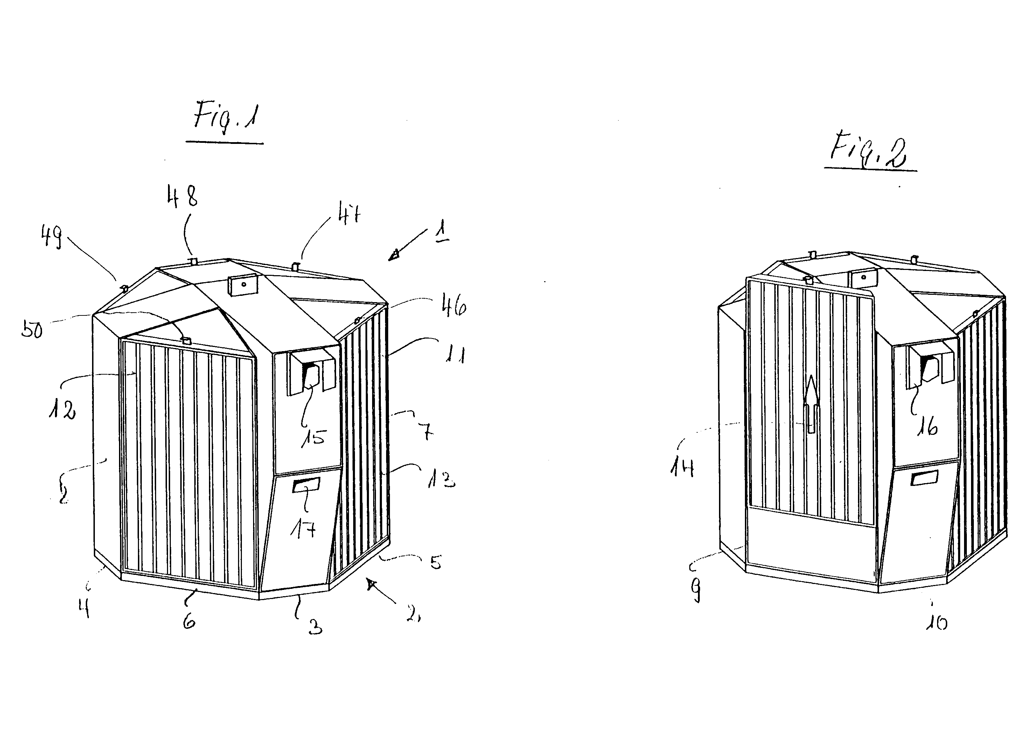

Gemäß der Darstellung der Fig. 1 verwendet
die Anordnung gemäß der Erfindung Depotbehälter
(1), welche einen polygonalen Grundriß (2) aufweisen. Dieser Grundriß weist abwechselnd kurze Seiten (3, 4) und lange Seiten (5, 6) auf. Die Seiten
weisen unter sich gleiche Abmessungen auf, d.h.
die kurzen Seiten (3, 4) sind unter sich gleich,
während auch die langen Seiten (5, 6) die gleiche
Länge aufweisen. Über den kurzen Polygonseiten
(3, 4) erstrecken sich feste Behälterwände (7, 8)
sowie (7a und 7b). Diese sind mit Führungen (9,
10) für die über den längeren Polygonseiten (5, 6)
angeordneten beweglichen Wände (11, 12 und
11a, 12a) versehen. Diese Wände sind zur Erhöhung ihrer Festigkeit mit senkrechten Sicken (13)
versehen und lassen sich gemäß dem Pfeil (14) in
Fig. 2 senkrecht nach oben und nach unten in den
Führungen (9, 10) bewegen.

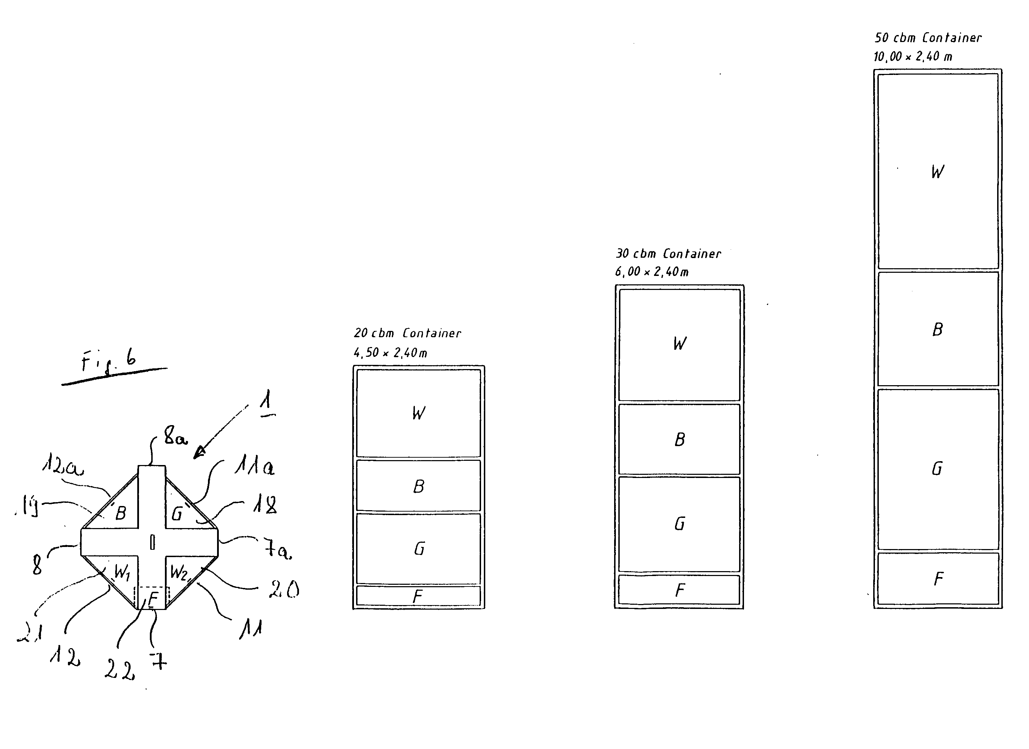

In der vekleinerten Wiedergabe des Depotbehälters (1) in Fig. 6 ist die Aufteilung des Behälterinnenraums durch die Kammern wiedergegeben.
Hinter der mit (7) bezeichneten Kammerwand, d.h.
hinter einer Öffnung (15), die zur Vermeidung von
Mißbrauch von einem dreiseitigen Schirm (16) umgeben ist, befindet sich die eigentliche Sortiervorrichtung. Sie ist bekannt und braucht daher im
einzelnen nicht beschrieben werden. Durch die Öffnung (15) wird Abfallhohlglas, z.B. Flaschen oder
andere Glasbehälter einzeln eingeworfen, nach Farben optoelektronisch sortiert und in die Kammern
von oben eingekippt, wodurch das Glas zerschlagen wird. Unter der Öffnung (15) befindet sich eine
weitere Öffnung (17), durch die anderer Abfall aus
Nichtglas in den Behälter eingebracht werden
kann. Hinter den Kammerwänden (7, 7a; 8, 8a)
befinden sich senkrechte Wände, welche die Kammern im Behälter voneinander abtrennen. Hierbei
sind die Kammern (18, 19), welche sich am weitesten von der Einwurföffnung (15) entfernt im Behälter befinden, für Buntglas vorgesehen, nämlich die
Kammer (18) für Grünglas und die Kammer (19) für
Braunglas. Die davor und der Einwurföffnung am
nächsten liegenden Kammern (20, 21) sind dagegen für Weißglas vorgesehen. Die Kammern (18-
21) weisen den gleichen Rauminhalt auf. Die Aufteilung der Kammern auf das sortierte Glas trägt
der Tatsache Rechnung, daß Weißglas den weitaus
überwiegenden Anteil im gesammelten Hohlglas
ausmacht.

Hinter der Kammerwand (7) befindet sich ein
wesentlich kleineres Abteil (22), in dem Nichtglas, z.B. keramische Gefäße gesammelt werden. Die
Wand dieser Kammer ist über der kurzen Behälterseite (3) angeordnet.

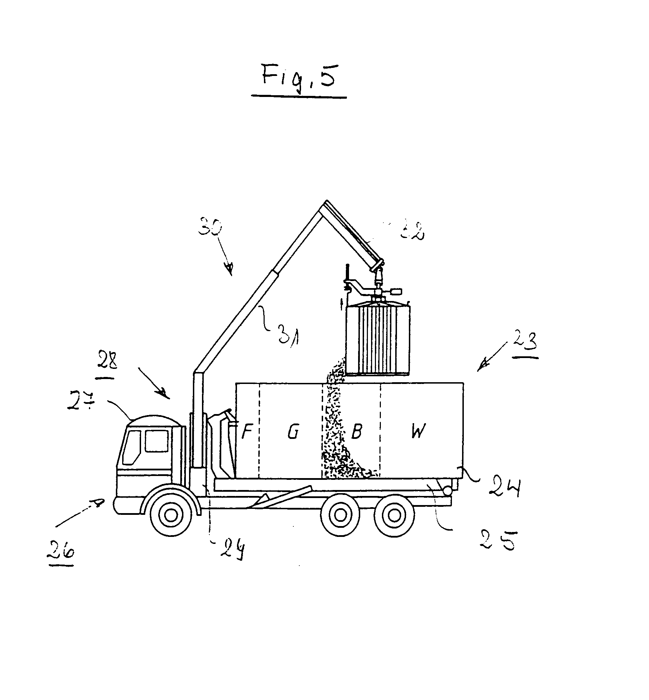

Zu der erfindungsgemäßen Anordnung gehört
ferner ein Sammler, welcher in Fig. 5 allgemein mit
(23) bezeichnet ist und aus einem Container (24)
auf einer Pritsche (25) eines Lkw (26) besteht. Der
Container kann von der Pritsche (25) ab- und auf
diese aufgeladen werden. Hinter dem Fahrerhaus
(27) ist ein Aufbaukran (28) angeordnet, welcher
eine höhenverstellbare Kransäule (29) mit einem
daran angelenkten Ausleger (30) aufweist. Der Ausleger besteht gemäß dem dargestellten Ausführungsbeispiel aus zwei Sektionen (31, 32), die teleskopierbar und zusammen auf der Kransäule sowie
in Gelenken gegeneinander schwenkbar sind. Die
dazu erforderlichen hydraulischen Antriebe sind
nicht dargestellt.

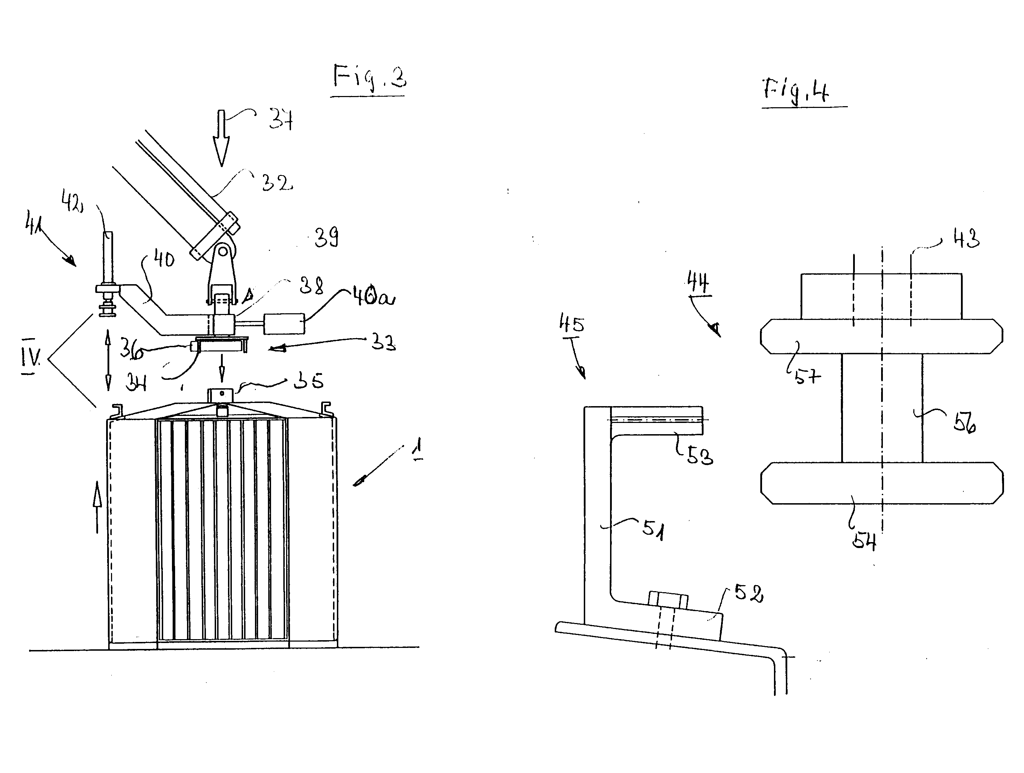

An der Spitze des Endauslegers (32) befindet
sich eine Aufnahme (33) (Fig. 3). Diese trägt in
einem Kopf (34), der sich über eine auf dem Behälter (1) feste Aufhängung (35) stülpen läßt, einen
horizontalen Riegelbolzen (36), der ebenfalls mit
einem nicht dargestellten hydraulischen Antrieb
versehen ist. Die Richtung, in der der Kopf (34)
über die Aufhängung (35) des Behälters gestülpt
wird, ist in Fig. 3 mit einem Pfeil gekennzeichnet.
Diese Bewegung wird mit dem Ausleger (30), d.h.
insbesondere mit dem Endausleger (32) entsprechend der Richtung des Pfeiles (37) ausgeführt.

Tatsächlich sitzt der Kopf an dem beweglichen
Teil (38) eines Drehwerks (39). Der feste Teil weist
einen mit einem Gegengewicht (40a) ausgeglichenen Kragarm (40) auf, an dessen Ende ein Hubwerk (41) befestigt ist. Das Hubwerk besteht gemäß dem dargestellten Ausführungsbeispiel aus einem hydraulischen Zylinder (42), dessen Kolbenstange (43), die den beweglichen Teil des Hubwerkes (41) bildet, ein Werkzeug (44) trägt, welches in
eine Aufnahme (45) durch Betätigen des Drehwerkes (39) eingespurt werden kann. Diese Aufnahmen
(45) sind an jeder Kammerwand, wie bei (46-50) in
Fig. 1 dargestellt, vorgesehen.

Gemäß der Darstellung der Fig. 4 ist jede
Aufnahme ein Abschnitt eines U-Profils (51), das
mit einem Profilschenkel (52) auf der betreffenden
Kammerwand verschraubt ist und dessen gegenüberliegender Profilschenkel (53) mit einem
Flansch (54) des Werkzeuges (44) formschlüssig
werden kann. Auf einem Schaft (56) des Werkzeuges (54) ist ein Oberflansch (57) hydraulisch beweglich angeordnet, mit dem der obere Profilschenkel (53) eingeklemmt werden kann.

Die beweglichen Kammerwände (12, 13) lassen
sich mit dem aus den Fig. 3 und 4 ersichtlichen
und vorstehend beschriebenen Hubwerk (41) nach
Maßgabe des Drehwinkels im Drehwerk (39) durch
Aus- und Einfahren der Kolbenstange (43) in den Zyliner (42) einzeln öffnen und schließen. Da die Kammern, wie aus Fig. 5 ersichtlich, als Schrägbodenentleerer ausgebildet sind, rutschen die in den Kammern enthaltenen Scherben automatisch bei geöffneter Kammerwand heraus und werden bei geschlossener Kammerwand zurückgehalten.

Der Sammler (23) ist, wie aus Fig. 5 ersichtlich, in Abteile FGBW unterteilt. Dabei stehen F für Nichtglas (Fremdstoffe), G für Grünglas, B für Braunglas und W für Weißglas.

Je nach Containerinhalt, der über den Darstellungen der Fig. 6 jeweils mit den Abmessungen angegeben ist, werden die Volumina der Abteile größer oder geringer. Die Aufteilung erfolgt jedoch stets im gleichen Verhältnis, so daß das Abteil für Weißglas das Abteil mit dem größten Volumen ist. Daran schließt sich volumenmäßig das Abteil für Grünglas, das Abteil für Braunglas und das Abteil für Nichtglas (Fremdstoffe) mit jeweils geringeren Inhalten an, wobei das zuletzt genannte Abteil den geringsten Rauminhalt hat. Diese Abstufung der Volumen der Abteile ist von dem Grundriß der Kammern unabhängig.

Die vorstehend im Zusammenhang mit den Fig. 3 bis 5 beschriebenen Antriebe des Krans, also die Auslegerantriebe, sowie die Antriebe des Riegelbolzens (36) des Drehwerkes (39) und des Hubwerkes (41) sind durch eine Programmsteuerung miteinander verbunden. Diese sorgt dafür, daß zunächst der Depotbehälter (1) aufgenommen wird, was sich am besten aus Fig. 3 erkennen läßt. Dabei wird der Ausleger mit seiner Aufnahme (33) über die Aufhängung (35) geschwenkt und danach diese abgesenkt, so daß sich der Kopf (34) über die Aufhängung (35) stülpt. Dann wird der Bolzen (36) hyraulisch in die Riegelstellung verbracht, wodurch der Behälter formschlüssig mit dem Bolzen verbunden ist. Nunmehr wird mit Hilfe des Armes (40) das Werkzeug (44) in die Aufnahme (45) eingespurt. Dazu dient das Drehwerk (39), welches den Behälter (1) unter den Arm (40) schwenkt. Nach dem Einspuren des Werkzeuges (44) ist die Kolbenstange (43) ausgefahren und die Aufnahme (45) formschlüssig mit dem Werkzeug verbunden.

Die Programmsteuerung verbringt nunmehr den Behälter über den Sammler (23), wobei gemäß dem Ausführungsbeispiel nach Fig. 5 die Kammer (19), welche Braunglas enthält, in das zugeordnete Abteil B entleert wird, in dem die ihr zugeordnete Kammer hochgezogen wird. Dazu wird die Kolbenstange (43) in den Zylinder (42) eingefahren. Nach Entleeren der Kammer wird die Kolbenstange erneut ausgefahren und die Kammerwand geschlossen. Der Behälter wird dann über das folgende Abteil mit Hilfe des Auslegers (30) durch Betätigung der Auslegersektionsantriebe verbracht, mit Hilfe des Drehwerks (40a) das Hubwerk (41) ausgespurt und in die Aufnahme (45) der folgenden Kammerwand wieder eingespurt.

Die Programmsteuerung ist insbesondere so eingerichtet, daß sich folgender Ablauf ergibt:

- Schwenken des Auslegers (30) mit der Aufnahme (33) aus der Ablagestellung über dem Sammler (23) in Richtung auf den Depotbehälter (1);
- Einbringen des Riegelbolzens (36) in die Aufhängung (35);
- Aufnehmen des Depotbehälters (11) durch Betätigen des Auslegers (30) und Verbringen des Behälters über dem Sammler (23) durch Betätigen des Drehwerkes in der Kransäule (29) bis zur Verbringung der Kammer (22) für Nichtglas über dem Abteil F des Sammlers ;
- Öffnen der Kammerwand mit der Öffnung (17) durch Betätigen des Hubwerkes (41) und Entladen der Kammer (22) von den darin enthaltenen Nichtglasstoffen;
- Schließen der Kammerwand (7);
- Betätigen des Drehwerkes (39) oberhalb der Aufnahme (33) und damit verbundenes Drehen des Depotbehälters (1) um 135° nach rechts;
- Betätigen der Auslegerantriebe zum Verbringen des Depotbehälters über das folgende Abteil G des Sammlers (23), bis die Kammer (18) über dem Abteil G steht;
- Öffnen der Wand der Kammer (18) mit dem Hubwerk (41) und Entladen der Kammer (18) in das Abteil G mit nachfolgendem Schließen der Kammerwand;
- Drehen des Depotbehälters (1) mit dem Drehwerk (39) um 270° nach links und Betätigen der Auslegerantriebe, bis die Kammer (19) über dem Abteil B des Sammlers (23) steht;
- Entleeren der Kammer (19) mit dem Hubwerk (41);
- nach dem Entleeren des Braunglases wird über das Drehwerk (39) der Depotbehälter (1) um 90° nach rechts gedreht und die Weißglaskammer (20) wie beschrieben entleert;
- eine weitere Drehung des Depotbehälters (1) mit dem Drehwerk (39) führt zur Entleerung der zweiten Weißglaskammer (21);
- daraufhin schwenkt das Drehwerk in der Kransäule (29) den Depotbehälter (1) auf den Aufstellungsplatz zurück, wobei die Einwurföffnng (15) wieder in dieselbe Richtung wie vor dem Beginn der Entleerung zeigt.

Es ist also möglich, einen relativ einfachen Programmablauf vorzusehen, der mit drei verschiedenen Drehwinkeln, nämlich um 135°, 270° und 90° auskommt, um die insgesamt fünf Kammern des Depotbehälters (1) zu entleeren.

## Patentansprüche

1. Anordnung zum Verladen von nach Farben sortierten Hohlgläsern, bestehend aus einem Depotbehälter (1), der durch vertikale Unterteilung Weißglas, Buntglas und gegebenenfalls Nichtglas in getrennten Kammern (18-22) mit jeweils einer zur Entleerung beweglichen Kammerwand (12, 13) enthält, sowie eine über den Kammern (18-22) angeordnete Sortiereinrichtung aufweist, einem vorzugsweise als Fahrzeug (26) mit Ladepritsche ausgebildeten Sammler (23), der in Abteile für die Glassorten und das Nichtglas unterteilt ist und aus einem Ladekran (28) mit schwenkbarem Ausleger (30), der mehrere mit Antrieben versehene Sektionen (31, 32) aufweist und mit einer Aufnahme (33) versehen ist, die durch einen beweglichen Riegel (36) mit einer auf dem Depotbehälter (1) festen Aufhängung (35) kuppelbar ist, dadurch gekennzeichnet, daß die beweglichen Kammerwände (12 ,13) einzeln zu öffnen und zu schließen und die Abteile (FGBW) des Sammlers (23) hintereinander angeordnet sind, deren Anordnungsrichtung mit einer der durch die Betätigung der Auslegersektionsantriebe möglichen Streichrichtung der Aufnahme (33) übereinstimmt, die für den fernbedienbaren Riegel (36) ein ebenfalls fernbedienbares Drehwerk (39) zum Schwenken des Behälters um die Hochachse und ein fernbedienbares, zum Öffnen und Schließen der beweglichen Kammerwände (12, 13) dienendes Hubwerk (41) aufweist, und daß für den Kran (28) die Auslegerantriebe, sowie die Fernbedienungen des Riegels (36) des Drehwerkes (39) und des Hubwerkes (41) eine Programmsteuerung vorgesehen ist, die das Aufnehmen des Depotbehälters (1), eine schrittweise Betätigung des Kranauslegers (30), die den Depotbehälter (1) nacheinander über die Abteile (FGBW) des Sammlers (23) verbringt und die Drehung des Depotbehälters (1), sowie das Öffnen und Schließen der beweglichen Kammerwände (12, 13) entsprechend der Stellung des Depotbehälters (1) über den Abteilen FGBW, sowie das Entriegeln des Depotbehälters (1) automatisch ablaufen läßt.

2. Anordnung insbesondere nach Anspruch 1, dadurch gekennzeichnet, daß jede Kammer (18-22) als Seitenentleerer mit Schrägboden und senkrecht verschieblicher Außenwand (12, 13) ausgebildet ist, die jeweils eine Aufnahme (45) zum Öffnen und Schließen mit dem Hubwerk (41) aufweist.

3. Anordnung nach Anspruch 2, dadurch gekennzeichnet, daß der Depotbehälter (1) einen vielfach polygonalen Grundriß (2) mit abwechselnd kurzen und langen Seiten (4-6) von unter sich gleichen Abmessungen aufweist, wobei sich über den kurzen

Fig. 2

Fig. 1

Fig.4

Fig.2

Fig. 5

Fig. 6

20 cbm Container
4,50 × 2,40 m

30 cbm Container
6,00 × 2,40m

50 cbm Container
10,00 × 2,40 m

EP 0 464 253 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A-905 461   (KOTRAC INTERNATIONAL N. V.)<br>* Seite 3, Zeile 14 - Zeile 26; Abbildung 1 *<br>– – – | 1 | B 65 F 1/12<br>B 65 F 1/00<br>B 65 F 3/00 |
| A | FR-A-2 311 683   (BENNES SEMPERE)<br>* Ansprüche 1,3,4; Abbildungen *<br>– – – | 1 | B 65 F 3/02 |
| A,D | EP-A-0 334 987   (MABEG MÜLL UND ABFALLBESEITI-GUNGS & CO.)<br>* Zusammenfassung; Abbildungen 1,2 *<br>– – – | 1 | |
| A | EP-A-0 054 463   (DOREY ET AL.)<br>* Abbildung 3 *<br>– – – | 1 | |
| A | DE-U-8 616 325   (C. F. MAIER GMBH & CO.)<br>* Seite 8, letzter Absatz - Seite 9, Absatz 1; Abbildung *<br>– – – – – | 1 | |

|  |
|---|
| **RECHERCHIERTE SACHGEBIETE (Int. Cl.5)**<br><br>B 65 F<br>B 60 P |

Der vorliegende Recherchenbericht wurde für alle Patentansprüche erstellt

| Recherchenort | Abschlußdatum der Recherche | Prüfer |
|---|---|---|
| Den Haag | 27 September 91 | MARTINEZ NAVARRO A |